# EUROPEAN PATENT APPLICATION

(11) **EP 4 227 027 A1**
(43) Date of publication of application: **16.08.2023**
(21) Application number: 22382106.7
(22) Date of filing: 09.02.2022
(51) Int. Cl.: B22F 10/14, B22F 10/40, B23K 31/02, B23P 15/24, B33Y 70/00, B22F 5/00, B22F 7/06, B22F 10/25, B22F 10/28, B22F 10/64, B23K 26/00, B33Y 10/00, B33Y 40/20, B33Y 80/00

(54) **ADDITIVE LAYER PRODUCTION OF MOLDS**

(71) Applicant: Fundación Tekniker, 20600 Eibar (Guipuzkoa) (ES)
(72) Inventor: GARMENDIA SAEZ DE HEREDIA, Iker, Eibar (ES); PUJANA ASTARLOA, Joseba, Eibar (ES)
(74) Representative: Balder IP Law, S.L.

(57) **Abstract**

A method for manufacturing a mold, comprising: producing, with a powder bed-based 3D additive layer manufacturing process, a plurality of subassemblies with an alloy that has a thermal expansion coefficient less than or equal to 2·10⁻⁶ K⁻¹; heat treating each produced subassembly of the plurality of subassemblies; welding one or more edges of pairs of produced and heat-treated subassemblies together such that each subassembly is at least welded to another subassembly thereby forming the mold; and applying a Direct Energy Deposition process to the mold such that one or more layers of a metallic material of the process are applied to a first side of each welded subassembly of the mold, the second side being opposite the first side.

## Description

### TECHNICAL FIELD

The present disclosure relates to the technical field of molds. More particularly, the present disclosure relates to a method for manufacturing a mold by way of both a powder bed-based 3D additive layer manufacturing process and a Direct Energy Deposition process, the mold being of an alloy with low coefficient of thermal expansion, and also to a mold manufactured with such process.

### BACKGROUND

Molds that are manufactured in, for instance, the aeronautical industry, the aerospace industry, the nautical industry, etc. are, in many occasions, characterized by manufacturing periods deemed to be both long in time and expensive.

Typically, the molds are manufactured by first producing a block of material by way of a smelting process. A machining process, like rough machining, applied to the block, whereby chips are removed, shapes the block into the form of the mold, and then a finish machining process is applied to have the mold. The amount of material wasted in comparison with the material present in the mold is not negligible, thus there are considerable costs in material alone. Obviously, the costs increase as the material used is more expensive.

When a product or component is to be manufactured using the mold, and the material with which the product or component is to be manufactured comprises several layers, for example with products or components made of composite material like e.g. carbon fiber, the sheets of the composite material are applied to the mold. Afterwards, the composite material is cured, for instance in an autoclave. Upon extraction of the product or component from the mold after the curation procedure has taken place, oftentimes the shape of the product changes due to, for instance, the elastic recovery of the composite material (a spring-back effect), the product or component thus not having the intended shape. Hence, to properly produce the products or components despite the spring-back effect, a series of molds needs be manufactured to produce a final mold that, once the manufactured product or component is extracted therefrom, the spring-back effect brings the product or component to the desired shape. This process, in turn, increases the overall costs even more.

The material used in the mold shall feature a high resistance at high temperature; the resistance should also be stable when there are changes in the temperature. A material like an alloy that includes iron in its composition may attain these properties, but such alloys are expensive owing to the mechanical properties thereof and, thus, waste thereof makes the manufacturing process inefficient.

There have been attempts to overcome some problems in the production of mold manufacturing, but these are deemed to still have limitations, for example patent document CN-107876769-A, which discloses a combination material additive manufacturing method of a large-size thin-walled open complex structure, or WO-2020/096951-A1, which describes constructing, layer-by-layer, a shaping cavity as a mold that is a container to be filled with liquid or semi-liquid fill material.

There is an interest in providing molds and methods for manufacturing said molds that make the production of molds more rapidly, in a more flexible way and which, furthermore, are cost-effective. There is also an interest in being capable of manufacturing molds with dimensions greater than those of the machine used in the production process and not only equal or smaller in dimensions than those of the machine.

### SUMMARY

A first aspect of the disclosure relates to a method for manufacturing a mold, comprising: producing a plurality of subassemblies with a powder bed-based 3D additive layer manufacturing process, and the additive layer manufacturing process forming the subassemblies with an alloy having a coefficient of thermal expansion that is less than or equal to 2·10⁻⁶ K⁻¹; applying a heat treatment process to each produced subassembly of the plurality of subassemblies; welding one or more edges of pairs of produced and heat-treated subassemblies together such that each subassembly is at least welded to another subassembly to form the mold; and applying a Direct Energy Deposition (DED) process to the mold such that one or more layers of a metallic material of the process are at least applied to a first side of each welded subassembly of the mold; and at least some of the subassemblies forming the mold comprising respective one or more supporting members on a second side of the respective subassembly, the second side being opposite the first side.

The method makes possible to manufacture a mold in a cost-effective manner by producing it by parts, that is to say, subassemblies. Each of the subassemblies is adapted to match one or more other subassemblies, more particularly one or more edges of each subassembly has a shape that partially or completely coincides with the shape of one or more edges of another subassembly or subassemblies. In this sense, each subassembly will be joined to one subassembly or more subassemblies, e.g. two, three, or even more subassemblies of the plurality, upon welding a portion or a totality of one or more edges thereof to a portion or a totality of one or more edges of another subassembly or subassemblies.

Each subassembly is produced in a simple manner by way of a powder bed manufacturing process, which is flexible and does not produce (or produces few) wasted material since it is an additive manufacturing process. The alloy for producing the subassemblies can be any alloy having a coefficient of thermal expansion as aforesaid to provide the mold with thermal stability; in some embodiments, the alloy includes iron.

The subassemblies are subjected to a heat treatment process as known in the art to release residual tensions, if any, that may have been caused therein during production thereof.

Once heat-treated, the plurality of subassemblies is arranged such that the edge or edges of each subassembly is next to the edge or edges of another subassembly intended to be arranged next to the former when the mold is formed. While the edge or edges thereof are in contact or at a short distance e.g. three millimeters or less, two millimeters or less, one millimeter or less, etc., the edges are welded together.

Depending on both the size of the cell used for the depositing of direct energy in the welding process and the maximum reach of the device, e.g. robotic arm, or person carrying out the welding, in some cases it may be necessary to reposition the mold between after each (or after some) deposition of material. In this sense, and when the welding process is automated, the position of the mold can be adjusted by e.g. using a contact probe that probes several reference points on the subassemblies or mold. The paths followed by the device, e.g. robotic arm, that welds the subassemblies are computed by way of the probing of the contact probe and a CAM software, i.e. Computer-Aided Manufacturing software.

Some or all of the subassemblies includes one or more supporting members, preferably a plurality of supporting members, intended to maintain the subassembly with a certain shape or curvature. Preferably, the supporting members are at least arranged on subassemblies that are prone to or subject to strains such that may deform or break the resulting mold. Moreover, in some cases, certain molds have complex geometries and it can be preferable not to arrange supporting members on subassemblies thereof that have small sizes; instead, one or more supporting members are preferably arranged on subassemblies that will be adjacent to the subassembly or subassemblies of small surface, in this way the manufacturing process becomes simpler as arranging supporting members on small-sized subassemblies is usually difficult. The end of the supporting members not contacting the second side of the subassemblies rests on the floor or a supporting surface, or is mechanically coupled therewith, e.g. welded to the floor or the supporting surface.

The subsequent DED process provides the mold with the hardness and resistance against wear that are necessary on the surface of the mold. The DED process, which can be according to the ASTM F3187 - 16 Standard Guide, applies the layer(s) of metallic material to the first side of each welded subassembly; this means that the subassemblies are not used as a container to be filled with metallic material.

In some embodiments, the respective one or more supporting members of the at least some subassemblies are produced together with the subassembly in the step of producing the subassembly with the powder bed-based 3D additive layer manufacturing process.

In some other embodiments, the method further comprises: producing each of the supporting members; and joining the respective one or more supporting members of the at least some subassemblies thereto, e.g. by means of a welding process. In these embodiments, the supporting members may be of the same alloy than the subassemblies, or of a different alloy that preferably has a coefficient of thermal expansion that is less than or equal to 2·10⁻⁶ K⁻¹.

In some embodiments, the method further comprises arranging a plurality of supports, each support being adapted to cooperate with a member of the subassemblies of the mold; and supporting the mold on the plurality of arranged supports.

The different supporting members and supports, once the mold has been produced, keeps the mold arranged such that it maintains a certain shape or curvature that the mold is intended to feature. Without the supporting members and supports, depending on e.g. the size of the mold, the shape or curvature of the mold may not be maintained.

The supports can be manufactured by way of e.g. a turning process, a cutting process, etc. Each support can also be manufactured by arranging one or more sheets and welding them together such that the desired shape is formed, and/or by deforming the sheet or sheets into the desired shape. The supports can be fixedly mounted on a surface such as a floor, a metallic sheet, etc.

In some embodiments, the method further comprises machining and/or finishing the mold after application of the Direct Energy Deposition process.

One or both processes can be applied to the mold to provide the surface of the mold with more polished surfaces. This, in turn, enhances the surfaces of the products manufactured by means of the mold.

In some embodiments, the additive layer manufacturing process is binder jetting.

Binder jetting is a cost-effective additive layer manufacturing process whereby the different parts, i.e. subassemblies, that form the mold can be produced. Not only the process is less costly than others, but also the manufacturing times can be lower than those of other processes.

In some embodiments, the plurality of subassemblies comprises N subassemblies, wherein *N* ≥ *V_{mold}*/*V_{machine}* or *N* ≥ *S_{mold}*/*S_{machine}*, where *V_{mold}* is a volume of the mold, *V_{machine}* is a volume of a build area of a machine applying the binder jetting, *S_{mold}* is an area of a greatest surface of the mold and *S_{machine}* is an area of a greatest surface of the build area.

In addition to molds smaller than or equal to the area and/or volume of the build area of the machine carrying out the binder jetting process, the present method makes possible to manufacture a mold with a surface and/or volume that is/are greater than the surface and/or volume of the build area of the machine carrying out the binder jetting process. The build area is the maximum surface or volume that a part produced by the machine can have owing to the size limitations of the machine. By way of example, current commercial machines for binder jetting do not have a build area greater than 800 x 500 x 400 mm³, yet the current method enables the manufacturing of a mold with greater volume using such machine or a machine with a build area smaller than the indicated one.

The surface of the mold, i.e. *S_{mold}*, can be measured as the greatest surface of a rectangular cuboid that encompasses the mold such that each side of the cuboid is tangent to at least one point of the mold.

In some embodiments, the Direct Energy Deposition process is laser cladding.

Laser cladding features a thermal input that is both lower and more precisely controllable than other DED processes like wire and arc additive manufacturing; both of these features improve the result of the DED process, particularly considering that the thickness of the mold is small. Laser cladding causes fewer and/or smaller deformities in the mold, the method thus producing a mold with good finish and likewise making possible to apply thinner layers, thereby reducing the amount of machining at the end if the mold is subjected to it.

In some embodiments, the laser cladding deposits material at a rate between 1 kg/h and 20 kg/h, and each layer of material deposited has a thickness between 0,1 mm and 3,0 mm.

A robot or a robotic arm carries out the laser cladding and moves at a speed between 100 mm/min and 3000 mm/min and a power of a laser source for the laser cladding is between 500 Wand 10000 W. The material can be deposited in metal wire or in powder.

With metal wire, the diameter thereof is preferably in the range of 1,0 and 2,0 mm, and more preferably in the range of 1,2 mm and 1,6 mm. The metal wires can be applied at speeds ranging e.g. between 0,1 m/min and 10,0 m/min, and preferably at speeds ranging between 1 m/min and 4 m/min. When the material is deposited in powder, preferably the powder is deposited at a range of 1,0 kg/h and 4 kg/h. Such diameters, speeds and deposition rates may result in a material input efficiency above 50%, and may even reach an efficiency of up to 90%.

In some embodiments, the alloy is an alloy selected from: UNS K93600, UNS K93601 and UNS K93603, e.g. Invar 36.

In some embodiments, a thickness of each produced subassembly is greater than or equal to 5,0 mm and less than or equal to 10,0 mm.

Such thickness makes the subassemblies lightweight and capable of withstanding the strains of the mold.

In some embodiments, each supporting member of the one or more supporting members of each subassembly is a cylindrical supporting member and a diameter thereof is greater than or equal to 10,0 mm and is less than or equal to 20,0 mm.

The number of supporting members and the location of each one of them are preferably selected based on the size and weight of the mold so that the supporting members provide the necessary stability for the use of the mold. Likewise, when the supporting members are cylindrical, the diameters thereof are preferably selected striving to attain said stability.

In some embodiments, at least two of the supporting members of the mold have different lengths.

By having two or more members with different lengths, molds that are not planar, i.e. that have a curvature, can be produced.

In some embodiments, the welding comprises laser welding.

The use of laser in the welding reduces or minimizes the number of distortions that are formed on the subassemblies. The distortions have a negative impact on the mold produced and, consequently, on any product manufactured using the mold.

In some embodiments, a greatest surface of the mold is between 5,0 m² and 50,0 m², and/or a volume of the mold is between 5,0 m³ and 100,0 m³. In some other embodiments, the greatest surface is between 1,0 m² and 5,0 m², and/or the volume of the mold is between 0,40 m³ and 5,0 m³. In some other embodiments, the greatest surface is between 0,04 m² and 1,00 m², and/or the volume of the mold is between 0,004 m³ and 0,40 m³.

A second aspect of the disclosure relates to a mold obtained by a method according to the first aspect of the disclosure, the mold comprising an alloy having a coefficient of thermal expansion that is less than or equal to 2·10⁻⁶ K⁻¹. In some embodiments, the alloy comprises iron and/or is an alloy selected from: UNS K93600, UNS K93601 and UNS K93603.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows subassemblies produced with methods in accordance with embodiments.
Figures 2-4 show molds produced with methods in accordance with embodiments.

### DESCRIPTION OF WAYS OF CARRYING OUT THE DISCLOSURE

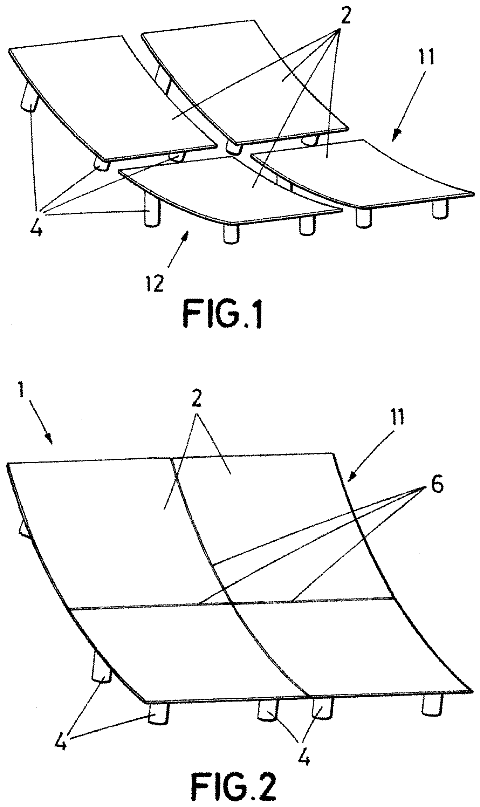

Figure 1 shows subassemblies 2 produced with methods in accordance with embodiments for the manufacturing of a mold. In this example, the number N of subassemblies is four, but it is readily apparent that in other embodiments N can be two, three, five, six or even more, such as e.g. ten, twenty, etc.

The subassemblies 2 are produced with a powder bed-based 3D additive layer manufacturing process such as, for example but without limitation, binder jetting. The additive layer manufacturing process uses an alloy like, for example but without limitation, UNS K93600, UNS K93601 and UNS K93603. Each subassembly 2 is manufactured such that at least a portion of one or more edges thereof match at least a portion of one or more edges of one or more subassemblies 2.

A heat treatment is at least applied to a first side 11 of the subassemblies 2 to release residual stresses therein. As known in the art, the parameters of the heat treatment process are selected based on the alloy used and e.g. the thickness of the subassemblies. By way of example, when the alloy is UNS K93600, the heat treatment involves heating the subassembly up to a temperature between e.g. 800°C and 850°C for 30 minutes per each inch of thickness of the subassembly, water quenching it, heating it up to a temperature between e.g. 300° and 350°C for approximately 60 minutes, and then cooling it.

One or several supporting members 4 are arranged on some or all subassemblies 2, particularly on a second side 12 thereof. As it can be appreciated in Figure 1, the subassemblies 2 feature a curvature which can be maintained thanks to supporting members 4 when the mold is produced; although not illustrated, it will be apparent that the free ends of the supporting members 4 contact a supporting structure or the floor. In some cases, the supporting members 4 are produced with the same powder bed-based 3D additive layer manufacturing process, whereas in some other cases the supporting members 4 are produced separately from the subassemblies 2 (either with an additive layer manufacturing process or a different manufacturing process) and coupled thereto afterwards by way of e.g. welding. The supporting members 4 may be coupled to the subassemblies 2 prior to or after a heat treatment process applied to the subassemblies 2; when coupled after the heat treatment, they may be coupled prior to or after a DED process has been applied to the resulting mold.

The second side 12 corresponds to a surface of the subassemblies 2 opposite the surface of the subassemblies 2 corresponding to the first side 11. When supporting members 4 have been produced together with the subassemblies 2, said supporting members 4 are preferably also heat-treated for releasing residual stresses.

Figure 2 shows a mold 1 produced with methods in accordance with embodiments. The mold 1 is, for example, produced by way of the subassemblies 2 shown in Figure 1.

After producing the subassemblies 2 of Figure 1, the subassemblies 2 are arranged such that each one is next to one or more other subassemblies 2, particularly next to those subassemblies 2 having edge or edges with a geometry matching that of the edge or edges of a given subassembly 2 as shown in Figure 1.

While each pair of subassemblies 2 is arranged with the subassemblies 2 being adjacent or in contact, the edge or edges are welded. The welding may be carried out in several passes. By way of example, a first welding pass is only for welding together several contact points of the two concerned subassemblies 2 to avoid accidental separation thereof, then a second welding pass (or further subsequent welding passes) weld together the entire portions of the edges that are in contact without the risk of subassemblies 2 being spaced apart owing to the first welding pass. Therefore, the second and subsequent welding passes (if any subsequent pass) is for forming weld seams 6 between the subassemblies 2. The welding is preferably carried out by means of laser welding.

Afterwards, a DED process is carried out on the resulting subassemblies already welded together. The DED deposits metal on each subassembly at least on the first side 11 thereof to improve the hardness and wear resistance of the mold 1. The DED process is, for example but without limitation, laser cladding.

The mold 1 can be used for the manufacturing of parts or workpieces after the DED process.

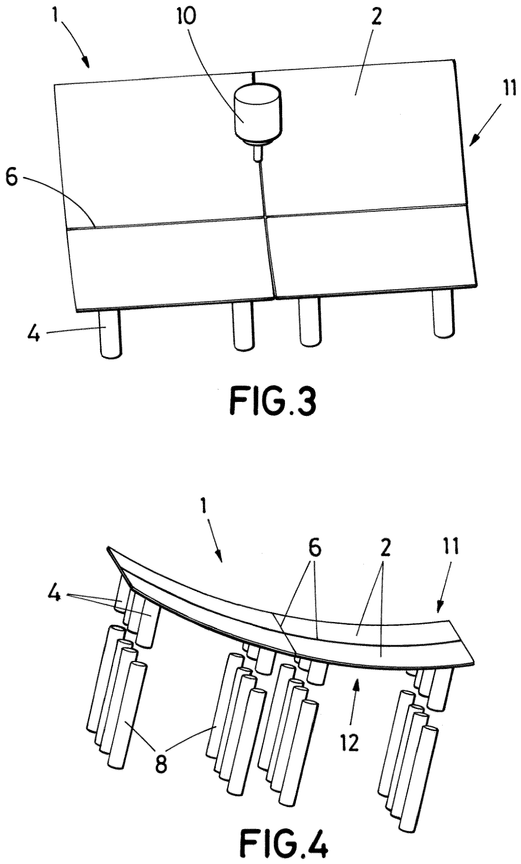

Figure 3 shows a mold 1 produced with methods in accordance with embodiments. The mold 1 is, for example, produced by way of the subassemblies 2 shown in Figure 1 and after the welding and DED process described with reference to Figure 2.

After the DED process, a device 10 as known in the art can be used for machining and/or finishing the surface of the mold 1, preferably at least the surface on the first side 11, thereby improving the surface thereof and, thus, the quality of the mold 1.

Figure 4 shows a mold 1 produced with methods in accordance with embodiments. The mold 1 is, for example, produced by way of the subassemblies 2 shown in Figure 1 and after the welding and DED process described with reference to Figure 2 and, optionally, a machining and/or finishing process as described with reference to Figure 3.

In some occasions, to use the mold 1, it is convenient to have the mold 1 secured in a reliable manner so that it remains motionless during use. Accordingly, a plurality of supports 8 can be arranged such that the supports 8 cooperate with the supporting members 4 of the mold 1. The supports 8 can be fixedly attached to a surface such as the floor, and receive or insert into the supporting members 4. That is to say, the supports 8 can be male-shaped or female-shaped, and the supporting members 4 be female-shaped or male-shaped, respectively.

The mechanical coupling of the support members 4 with the supports 8 can be by way of positive coupling, i.e. cooperating geometries of the elements, and/or with mechanical coupling means such as screws, bolts, etc.

In this text, the term "comprises" and its derivations (such as "comprising", etc.) should not be understood in an excluding sense, that is, these terms should not be interpreted as excluding the possibility that what is described and defined may include further elements, steps, etc. Further, each range described in the present disclosure also includes the endpoints specified.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for manufacturing a mold (1), comprising:
producing a plurality of subassemblies (2) with a powder bed-based 3D additive layer manufacturing process, and the additive layer manufacturing process forming the subassemblies (2) with an alloy having a coefficient of thermal expansion that is less than or equal to 2·10⁻⁶ K⁻¹;
applying a heat treatment process to each produced subassembly of the plurality of subassemblies (2);
welding one or more edges of pairs of produced and heat-treated subassemblies (2) together such that each subassembly (2) is at least welded to another subassembly (2) to form the mold; and
applying a Direct Energy Deposition process to the mold (1) such that one or more layers of a metallic material are at least applied to a first side (11) of each welded subassembly (2) of the mold (1); and
at least some of the subassemblies (2) forming the mold (1) comprise respective one or more supporting members (4) on a second side (12) of the respective subassembly (2), the second side (12) being opposite the first side (11).

2. The method of claim 1, further comprising arranging a plurality of supports (8), each support (8) being adapted to cooperate with a supporting member (4) of the subassemblies (2) of the mold (1); and supporting the mold (1) on the plurality of arranged supports (8).

3. The method of any one of the preceding claims, further comprising machining and/or finishing the mold (1) after application of the Direct Energy Deposition process.

4. The method of any one of the preceding claims, wherein the additive layer manufacturing process is binder jetting.

5. The method of claim 4, wherein the plurality of subassemblies (2) comprises N subassemblies (2), wherein *N* ≥ *V*_{*mold*/}*V_{machine}* or *N* ≥ *S_{mold}*/*S_{machine},* where V_{mold} is a volume of the mold (1), V_{machine} is a build area of a machine applying the binder jetting, S_{mold} is a greatest surface of the mold (1) and S_{machine} is a greatest surface of the build area.

6. The method of any one of the preceding claims, wherein the Direct Energy Deposition process is laser cladding.

7. The method of claim 6, wherein the laser cladding deposits material at a rate between 1 kg/h and 20 kg/h, and each layer of material deposited has a thickness between 0,1 mm and 3,0 mm.

8. The method of any one of the preceding claims, wherein the alloy is an alloy selected from: UNS K93600, UNS K93601 and UNS K93603.

9. The method of any one of the preceding claims, wherein a thickness of each produced subassembly (2) is greater than or equal to 5,0 mm and less than or equal to 10,0 mm.

10. The method of any one of the preceding claims, wherein: the respective one or more supporting members (4) of the at least some subassemblies (2) are produced together with the subassembly (2) in the step of producing the subassembly (2) with the powder bed-based 3D additive layer manufacturing process; or the method further comprises: producing each of the supporting members (4), and joining the respective one or more supporting members (4) of the at least some subassemblies (2) thereto.

11. The method of any one of the preceding claims, wherein at least two of the supporting members (4) of the mold (1) have different lengths.

12. The method of any one of the preceding claims, wherein the welding comprises laser welding.

13. A mold (1) obtained by the method of any one of the preceding claims, the mold (1) comprising an alloy having a coefficient of thermal expansion that is less than or equal to 2·10⁻⁶ K⁻¹.

14. The mold (1) of claim 13, or the method of any one of claims 1-12, wherein a greatest surface of the mold (1) is between 5,0 m² and 50,0 m², and/or a volume of the mold (1) is between 5,0 m³ and 100,0 m³.

15. The mold (1) of any one of claims 13-14, or the method of any one of claims 1-12 and 14, wherein the alloy comprises iron.
